(19) Europäisches Patentamt European Patent Office Office européen des brevets

(11) **EP 3 358 378 B1**

(12) **EUROPEAN PATENT SPECIFICATION**

(45) Date of publication and mention of the grant of the patent:
**19.08.2020 Bulletin 2020/34**

(51) Int Cl.:
*G02B 5/02* *(2006.01)* *F21V 9/08* *(2018.01)*
*C08L 33/14* *(2006.01)* *C08L 69/00* *(2006.01)*

(21) Application number: **16851917.1**

(22) Date of filing: **30.09.2016**

(86) International application number:
**PCT/JP2016/079154**

(87) International publication number:
**WO 2017/057748 (06.04.2017 Gazette 2017/14)**

(54) **MOLDED ARTICLE MADE OF LIGHT-DIFFUSING RESIN COMPOSITION AND USE THEREOF**

FORMKÖRPER AUS LICHTSTREUENDER HARZZUSAMMENSETZUNG UND VERWENDUNG DAFÜR

CORPS MOULÉ À COMPOSITION DE RÉSINE DIFFUSANT LA LUMIÈRE ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2015 JP 2015194328**

(43) Date of publication of application:
**08.08.2018 Bulletin 2018/32**

(73) Proprietor: **Sekisui Plastics Co., Ltd.**
**Osaka-shi,**
**Osaka 530-8565 (JP)**

(72) Inventor: **ISHIMORI, Fumitaka**
**Koka-shi**
**Shiga 528-0056 (JP)**

(74) Representative: **Müller-Boré & Partner**
**Patentanwälte PartG mbB**
**Friedenheimer Brücke 21**
**80639 München (DE)**

(56) References cited:
WO-A1-2014/025657    WO-A1-2014/119042
WO-A1-2015/046222    JP-A- H11 248 910
JP-A- 2014 063 120    JP-A- 2015 158 625

**Description**

[Technical Field]

The present invention relates to a molded article which is made of a light-diffusing resin composition and which contains a thermoplastic resin and transparent particles dispersed therein, and also relates to use of the molded article (as a lighting cover, a front panel for a spotlight, a partition, and a daylighting material).

[Background Art]

A molded article made of a light-diffusing resin composition which contains a thermoplastic resin and transparent particles dispersed therein has been known in the art.

For example, PTL 1 teaches a light diffusion plate made of a practically transparent resin and light-diffusing resin particles dispersed in the resin, in which the light-diffusing resin particles are polymer particles having a substantially spherical shape and an average particle size in the range of 3 to 20 $\mu$m. In the light-diffusing resin particles, the coefficient of variation (CV value) in particle size distribution is 20% or less. Of the polymer particles which constitute the light-diffusing resin particles, not less than 75% by weight of the polymer particles have a particle size which is $\pm$10% of the average particle size of the light-diffusing resin particles. PTL 2 discloses a light diffusing composition comprising a matrix polymer and from 0.05 to 2.5 wt% diffuser polymer particles, wherein the diffuser polymer particles are characterized by an average diameter from 2 to 20 micrometers, a particle size distribution such that at least 90 wt % of the polymer particles fall within $\pm$30% of the volume average particle size and a crosslinking level greater than 4wt%.

[Citation List]

[Patent Literature]

[PTL 1] JP H07-234304 A
[PTL 2] WO2014025657 A1

[Summary of Invention]

[Technical Problem]

However, the conventional common molded article made of the light-diffusing resin composition could not color transmitted light.

The present invention is made in view of this conventional problem, and aims to provide a molded article made of a light-diffusing resin composition which can color transmitted light, and also to provide a lighting cover, a front panel for a spotlight, a partition, and a daylighting material using the molded article.

[Solution to Problem]

In a molded article described herein, the light-diffusing resin composition contains a thermoplastic resin and transparent particles which are dispersed in the thermoplastic resin and which have a volume-average particle size of 1 to 100 $\mu$m. The molded article has a total light transmittance of 85% or higher. The molded article has a degree of dispersion of 20° or less, wherein the degree of dispersion is defined as a transmission angle at which a light transmittance is 50% of a rectilinear light transmittance when light is emitted to a surface of the molded article in a direction normal to the surface. An average rectilinear light transmittance at wavelengths from 410 nm to 500 nm is greater than an average rectilinear light transmittance at wavelengths from 500 nm to 600 nm.

Owing to these features, it is possible to provide a molded article which can transmit a satisfactory amount of light, which can color transmitted light in a color between blue-violet and yellow-green (particularly, in blue or green), and which can serve as an optical filter. Transmitted light colored in a color between blue-violet and yellow-green (particularly, in blue or green) is preferable because the light in such a color can calm the human mind. On the other hand, transmitted light colored in yellow is not preferable because the yellow light gives an aged impression to the molded article.

In order to solve the above problem, a molded article made of a light-diffusing resin composition according to the first embodiment of the present invention has following features. In this molded article, the light-diffusing resin composition contains a thermoplastic resin and transparent particles which are dispersed in the thermoplastic resin and which have a volume-average particle size of not smaller than 4.5 μm and not greater than 7 μm. The transparent particles have a coefficient of variation in particle size of 5 to 15%. A difference between a refractive index of the thermoplastic resin and a refractive index of the transparent particles is 0.02 to 0.1. The molded article contains the transparent particles in an amount of 0.1 to 1 % by weight. The molded article has a thickness of 1 to 3 mm. Owing to these features, it is possible to provide a molded article which can color transmitted light in blue. It is also possible to provide a molded article in which an average rectilinear light transmittance at wavelengths from 410 nm to 500 nm is greater than an average rectilinear light transmittance at wavelengths from 500 nm to 600 nm.

In order to solve the above problem, a molded article made of a light-diffusing resin composition according to the second embodiment of the present invention has following features. In this molded article, the light-diffusing resin composition contains a thermoplastic resin and transparent particles which are dispersed in the thermoplastic resin and which have a volume-average particle size of over 7 μm and not greater than 9 μm. The transparent particles have a coefficient of variation in particle size of 5 to 15%. A difference between a refractive index of the thermoplastic resin and a refractive index of the transparent particles is 0.02 to 0.1. The molded article contains the transparent particles in an amount of 0.1 to 1 % by weight. The molded article has a thickness of 1 to 3 mm. Owing to these features, it is possible to provide a molded article which can color transmitted in yellow-green. It is also possible to provide a molded article in which an average rectilinear light transmittance at wavelengths from 410 nm to 500 nm is greater than an average rectilinear light transmittance at wavelengths from 500 nm to 600 nm.

A lighting cover according to the present invention is characterized by being composed of the molded article made of a light-diffusing resin composition according to the present invention.

In the molded articles according to the first and second embodiments of the present invention, an average rectilinear light transmittance at wavelengths from 410 nm to 500 nm can be made greater than an average rectilinear light transmittance at wavelengths from 500 nm to 600 nm. As already known, when an object is illuminated by a lighting apparatus, dullness of color is reduced by decreasing light components at the wavelengths from 500 to 660 nm, such as the yellow component which is an intermediate color. Accordingly, by making a lighting cover with use of any of the molded articles according to the present invention which can decrease the light components at the wavelengths from 500 to 660 nm, the lighting cover can reduce dullness of color when an object is illuminated by a lighting apparatus equipped with the lighting cover.

A front panel for a spotlight according to the present invention is characterized by being composed of the molded article made of a light-diffusing resin composition according to the present invention.

The front panel for a spotlight according to the present invention is made with use of any of the molded articles according to the present invention which can decrease the light components at the wavelengths from 500 to 660 nm, as mentioned above. Therefore, when an object is illuminated by the spotlight, the front panel for a spotlight can reduce dullness of color.

A partition according to the present invention is characterized by including the molded article made of a light-diffusing resin composition according to the present invention.

As described above, the molded article according to the first embodiment of he present invention can color transmitted light in blue; and the molded article according to the second embodiment of the present invention can color transmitted light in yellow-green. Hence, the partition according to the present invention can color transmitted light in blue or yellow-green and can create a space with a calm atmosphere.

A daylighting material according to the present invention is characterized by including the molded article made of a light-diffusing resin composition according to the present invention.

As described above, the molded article according to the first embodiment of the present invention can color transmitted light in blue; and the molded article according to the second embodiment of the present invention can color transmitted light in yellow-green. Hence, the daylighting material according to the present invention can color transmitted light in blue or yellow-green and can create a space with a calm atmosphere.

[Advantageous Effect of Invention]

The present invention can provide a molded article made of a light-diffusing resin composition and capable of coloring transmitted light, and can also provide a lighting cover, a front panel for a spotlight, a partition, and a daylighting material using the molded article.

[Brief Description of Drawings]

Fig. 1 is a graph showing spectral transmittances of molded articles made of light-diffusing resin compositions, according to Examples of the present application.

Fig. 2 is a graph showing an example of the intensity of light transmitted through a molded article made of a light-diffusing resin composition, measured with use of a goniophotometer.

Fig. 3 is a sectional view showing a configuration of a spotlight equipped with a front panel according to an embodiment of the present invention.

Fig. 4 is a perspective view of a partition according to an embodiment of the present invention.

Fig. 5 is a perspective view of a lighting cover according to one of the Examples of the present invention.

Fig. 6 is a side view of the spotlight according to one of the Examples of the present invention.

[Description of Embodiments]

The present invention is hereinafter described in detail.

<Molded article made of a light-diffusing resin composition>

A molded article made of a light-diffusing resin composition (hereinafter simply called "molded article") includes following arrangements. In a molded article described herein, the light-diffusing resin composition contains a thermoplastic resin and transparent particles which are dispersed in the thermoplastic resin and which have a volume-average particle size of 1 to 100 $\mu$m. The total light transmittance of the molded article is 85% or higher. With a proviso that the degree of dispersion is defined as a transmission angle at which a light transmittance is 50% of a rectilinear light transmittance when light is emitted to a surface of the molded article in a direction normal to the surface, the degree of dispersion of the molded article is 20° or less. The average rectilinear light transmittance at the wavelengths from 410 nm to 500 nm is greater than the average rectilinear light transmittance at the wavelengths from 500 nm to 600 nm.

For the molded article, the average rectilinear light transmittance at the wavelengths from 410 nm to 500 nm simply needs to be greater than the average rectilinear light transmittance at the wavelengths from 500 nm to 600 nm. Having said that, with a proviso that T1 represents an average rectilinear light transmittance at the wavelengths from 410 nm to 500 nm and that T2 represents an average rectilinear light transmittance at the wavelengths from 500 nm to 600 nm, T1 - T2 is preferably 0.5% or greater, and more preferably 0.9% or greater.

For the purpose of description, the average rectilinear light transmittances at the wavelengths from 435 to 480 nm (blue region), from 500 to 560 nm (green region), and from 610 to 750 nm (red region), obtained by the calculation process described later, are represented by B, G, and R, respectively. Likewise, the average rectilinear light transmittance at the wavelengths from 580 to 595 nm (yellow region), obtained by the calculation process described later, is represented by Y. As the relations of B to Y, G to Y, and R to Y, it is preferable to satisfy B > Y, and it is more preferable to satisfy both B > Y and G > Y. In this condition, the molded article can color transmitted light in blue or green.

The total light transmittance of the molded article may be 85% or higher, preferably 90% or higher, and more preferably 91.5% or higher. The resulting molded article can transmit a greater amount of light emitted from a light source. It is therefore possible to prevent a decrease in brightness of light from the light source when the molded article is installed on an optical path of the light source. Eventually, by using the molded article, it is possible to provide a light source-equipped device (a lighting, etc.) which can output light from the light source with higher brightness.

The degree of dispersion of the molded article simply needs to be 20° or less, but is preferably 16° or less, more preferably 10° or less, and further preferably 7° or less. The resulting molded article can have an even better coloring effect for transmitted light. In addition, the degree of dispersion of the molded article is preferably 1° or greater, and more preferably 1.5° or greater. The resulting molded article can have an even better coloring effect for transmitted light.

In the molded article, the local maximum of the spectral transmittance at the wavelengths from 380 to 800 nm is preferably within a wavelength range of 380 to 500 nm. This requirement can further enhance the effect of coloring transmitted light in a color between blue-violet and yellow-green.

As far as the optical effects of the present invention can be exerted, the shape and thickness of the molded article are not particularly limited. Having said that, a light diffusion plate (a plate-shaped molded article) having a thickness in the range of 0.5 to 3 mm is preferable, and the one having a thickness in the range of 1 to 3 mm is more preferable. The resulting molded article can have an even better coloring effect for transmitted light. In the case where the molded article is a plate-shaped light diffusion cover for an LED lamp (a kind of light diffusion plate) to be used with an LED lamp such as an LED light bulb and a double-capped LED, the thickness (plate thickness) of the plate-shaped light diffusion cover for an LED lamp is more preferably in the range of 1 to 2 mm so as to reduce the weight of the LED light bulb and the double-capped LED, as desired in the industry.

The size and shape of the light diffusion cover for an LED lamp are not particularly limited, and, for example, may be adjusted to the size and shape of a light emission part (the part except the light diffusion cover for an LED lamp) of an LED lamp such as an LED light bulb, a double-capped LED lamp, an LED desk lamp, and an LED ceiling light.

<Transparent particles>

The transparent particles simply need to be light transmissive. The transparent particles may be particles having a uniform refractive index (for example, particles of a single material, or core-shell particles each containing a core and a shell having the same refractive index), or may be particles containing a plurality of portions having different refractive indexes (for example, core-shell particles each containing a core and a shell having different refractive indexes).

The volume-average particle size of the transparent particles simply needs to be from 1 to 100 $\mu$m, but is preferably from 2 to 20 $\mu$m and more preferably from 2 to 10 $\mu$m. The resulting molded article can have an even better coloring effect for transmitted light. For the transparent particles, a particularly preferable volume-average particle size is from 4.5 to 9 $\mu$m, so that transmitted light can be colored in a color between blue-violet and yellow-green. Additionally, the volume-average particle size of the transparent particles may be not smaller than 4.5 $\mu$m and not greater than 7 $\mu$m, so that transmitted light can be colored in blue. Alternatively, the volume-average particle size of the transparent particles may be over 7 $\mu$m and not greater than 9 $\mu$m, so that transmitted light can be colored in yellow-green.

If the transparent particles have a uniform refractive index, the volume-average particle size of the transparent particles is preferably from 2 to 20 $\mu$m, and more preferably from 2 to 10 $\mu$m. By controlling the volume-average particle size of the transparent particles within such ranges, it is possible to provide a molded article which has an even higher total light transmittance and an even better light-diffusing property. If the transparent particles have a uniform refractive index, the volume-average particle size for the transparent particles is particularly preferably from 4.5 to 9 $\mu$m, so that transmitted light can be colored in a color between blue-violet and yellow-green.

If the transparent particles are core-shell particles each containing a core and a shell having different refractive indexes and if the refractive index of the shell is nearly equal to the refractive index of the thermoplastic resin, the volume-average particle size of the core is preferably from 2 to 20 $\mu$m, and more preferably from 2 to 10 $\mu$m. By controlling the volume-average particle size of the core within such ranges, it is possible to provide a molded article which has an even higher total light transmittance and an even better light-diffusing property. For the core, a particularly preferable volume-average particle size is from 4.5 to 9 $\mu$m, so that transmitted light can be colored in a color between blue-violet and yellow-green.

The refractive index of the transparent particles only needs to be different from the refractive index of the thermoplastic resin. The difference between the refractive index of the transparent particles and that of the thermoplastic resin is preferably in the range of 0.01 to 0.2, and more preferably in the range of 0.02 to 0.1.

In order to bring the difference between the refractive index of the transparent particles and that of the thermoplastic resin in the range of 0.02 to 0.1 in the case where the thermoplastic resin is a polycarbonate resin (typically, refractive index 1.58), the transparent particles may be composed of a crosslinked (meth)acrylic-based resin (typically, refractive index 1.49), a crosslinked (meth)acrylic-styrene copolymer (typically, refractive index from 1.50 to 1.58), or the like. In order to bring the difference between the refractive index of the transparent particles and that of the thermoplastic resin in the range of 0.02 to 0.1 in the case where the thermoplastic resin is a (meth)acrylic-based resin (typically, refractive index 1.49), the transparent particles may be composed of a crosslinked styrene-based resin (typically, refractive index 1.59), a crosslinked (meth)acrylic-styrene copolymer (typically, refractive index from 1.50 to 1.58), a silicone-based resin (typically, refractive index 1.43), silica particles (typically, refractive index 1.43), or the like.

Provided that the volume-average particle size of the transparent particles is represented by D (pm), that the refractive index of the transparent particles is represented by np, and that the refractive index of the thermoplastic resin is represented by $n_A$, then the value of $D \times (np - n_A)$ is preferably 0.3 or greater, and more preferably 0.35 or greater. This requirement can further enhance the effect of coloring transmitted light in a color between blue-violet and yellow-green. The value of $D \times (np - n_A)$ is further preferably 0.4 or greater, and particularly preferably 0.45 or greater, so that transmitted light can be colored in a color between blue and yellow-green. Additionally, the value of $D \times (np - n_A)$ is preferably not greater than 2, and more preferably not greater than 1. This requirement can further enhance the coloring effect for transmitted light.

The coefficient of variation in particle size of the transparent particles is 15% or less, and preferably 13% or less. The resulting molded article can have an even better coloring effect for transmitted light. In addition, the coefficient of variation in particle size of the transparent particles is preferably 5% or greater, and more preferably 7% or greater. This requirement enables efficient production of a molded article.

Materials of the transparent particles (materials constituting the transparent particles) include, for example: synthetic resins such as crosslinked (meth)acrylic-based resins, crosslinked styrene-based resins, polyurethane-based resins, polyester-based resins, silicone-based resins, fluorine-based resins, and copolymers thereof; inorganic substances such as silica, calcium carbonate, and barium sulfate; and the like. Among them, preferable materials are synthetic resins; more preferable materials are crosslinked (meth)acrylic-based resins, crosslinked styrene-based resins, copolymers thereof (crosslinked (meth)acrylic-styrene copolymer), and silicone-based resins; and further preferable materials are crosslinked (meth)acrylic-based resins, crosslinked styrene-based resins, and copolymers thereof. Particularly preferable materials among the crosslinked (meth)acrylic-based resins, crosslinked styrene-based resins, and copolymers thereof are crosslinked (meth)acrylic-based resins free of a structural unit derived from a monofunctional styrene-based monomer because of their ability to avoid discoloration by ultraviolet radiation. In the case where the thermoplastic resin is polycarbonate, crosslinked (meth)acrylic-based resins are most preferable. The transparent particles may be used alone or in combination. In this specification, the term "(meth)acrylic" means methacrylic or acrylic.

In the case where the transparent particles contain a polymer of a vinyl-based monomer (a compound having at least one ethylenic unsaturated group) containing a crosslinkable monomer (a compound having two or more ethylenic unsaturated groups) such as a crosslinked (meth)acrylic-based resin, a crosslinked styrene-based resin, and a copolymer thereof, this polymer contains a structural unit derived from the crosslinkable monomer preferably in an amount of 1 to 50% by weight, and more preferably in an amount of 5 to 30% by weight. If such a range is satisfied, a high-level three-dimensional network can be formed in the transparent particles, so that the resulting molded article can have an even better light diffusion property.

The crosslinkable monomers include, for example, (meth)acrylate-based polyfunctional monomers such as allyl methacrylate, ethylene glycol di(meth)acrylate, diethylene glycol di(meth)acrylate, triethylene glycol di(meth)acrylate, nonaethylene glycol di(meth)acrylate, tetradecaethylene glycol di(meth)acrylate, decaethylene glycol di(meth)acrylate, pentadecaethylene glycol di(meth)acrylate, 1,3-butylene glycol di(meth)acrylate, 1,4-butanediol di(meth)acrylate, 1,6-hexanediol di(meth)acrylate, glycerin di(meth)acrylate, trimethylolpropane tri(meth)acrylate, pentaerythritol tetra(meth)acrylate, phthalate diethylene glycol di(meth)acrylate, caprolactone-modified dipentaerythritol hexa(meth)acrylate, caprolactone-modified neopentylglycol hydroxypivalate diacrylate, polyester acrylate, and urethane acrylate; and aromatic vinyl-based polyfunctional monomers such as divinyl benzene, divinyl naphthalene, and derivatives thereof. These crosslinkable monomers may be used in combination. In this specification, the term "(meth)acrylate" means methacrylate or acrylate.

The crosslinked (meth)acrylic-based resin is a polymer made from a monomer mixture containing a monofunctional (meth)acrylic-based monomer. The monofunctional (meth)acrylic-based monomer is not particularly limited as far as being a compound having an acryloyloxy group or a methacryloyloxy group. Examples of the monofunctional (meth)acrylic-based monomer are acrylic acid, methyl acrylate, ethyl acrylate, n-butyl acrylate, isobutyl acrylate, dodecyl acrylate, stearyl acrylate, 2-ethylhexyl acrylate, tetrahydrofurfuryl acrylate, methacrylic acid, methyl methacrylate, ethyl methacrylate, n-propyl methacrylate, n-butyl methacrylate, isobutyl methacrylate, n-octyl methacrylate, dodecyl methacrylate, 2-ethylhexyl methacrylate, and stearyl methacrylate. These monofunctional (meth)acrylic-based monomers may be used alone or in combination.

The crosslinked styrene-based resin is a polymer made from a monomer mixture containing a monofunctional styrene-based monomer. The monofunctional styrene-based monomer is not particularly limited as far as being a styrene having an ethylenic unsaturated group. Examples of the styrene-based resin are styrene, o-methylstyrene, m-methylstyrene, p-methylstyrene, and α-methylstyrene. These monofunctional styrene-based monomers may be used alone or in combination. The copolymer of the crosslinked (meth)acrylic-based resin and the crosslinked styrene-based resin contains the above-mentioned monofunctional (meth)acrylic-based monomer and the above-mentioned monofunctional styrene-based monomer.

The shape of the transparent particles is not particularly limited, but a spherical shape is preferable. The transparent particles may be dispersed uniformly in the entire molded article, or may be provided as a transparent particle layer on a light incident surface and/or a light exit surface of the thermoplastic resin.

The content of the transparent particles in the molded article is in the range from 0.1 to 1% by weight. The resulting molded article can have an even better coloring effect for transmitted light.

<Thermoplastic resin>

The thermoplastic resin is not particularly limited as far as it is transparent enough to provide a molded article having a total light transmittance of 85% or higher. Examples of the thermoplastic resin are polycarbonate resins; cellulose derivatives such as acetylcellulose, nitrocellulose, cellulose acetate butyrate, ethylcellulose, and methylcellulose; a homopolymer or copolymer of vinyl acetate, a homopolymer or copolymer of vinyl chloride, a homopolymer or copolymer of vinylidene chloride; acetal resins such as polyvinyl formal and polyvinyl butyral; (meth)acrylic-based resins such as acrylic resins (polyacrylic acid esters) and copolymer resins thereof, and methacrylic resins (polymethacrylic acid esters) and copolymer resins thereof; acrylonitrile-butadiene-styrene copolymer resins (ABS resins); polystyrene resins; polyamide resins; and linear polyester resins.

Preferably, the molded article does not contain any pigment. The resulting molded article can have a high total light transmittance.

<Molded articles made of light-diffusing resin compositions according to the first and second embodiments>

A molded article made of a light-diffusing resin composition according to the first embodiment of the present invention includes following arrangements. In this molded article, the light-diffusing resin composition contains a thermoplastic resin and transparent particles which are dispersed in the thermoplastic resin and which have a volume-average particle size of not smaller than 4.5 $\mu$m and not greater than 7 $\mu$m. The transparent particles have a coefficient of variation in particle size of 5 to 15%. A difference between a refractive index of the thermoplastic resin and a refractive index of the transparent particles is 0.02 to 0.1. The molded article contains the transparent particles in an amount of 0.1 to 1 % by weight. The molded article has a thickness of 1 to 3 mm.

A molded article made of a light-diffusing resin composition according to the second embodiment of the present invention includes following arrangements. In this molded article, the light-diffusing resin composition contains a thermoplastic resin and transparent particles which are dispersed in the thermoplastic resin and which have a volume-average particle size of 1 to 100 $\mu$m. The transparent particles have a volume-average particle size of over 7 $\mu$m and not greater than 9 $\mu$m. The transparent particles have a coefficient of variation in particle size of 5 to 15%. A difference between a refractive index of the thermoplastic resin and a refractive index of the transparent particles is 0.02 to 0.1. The molded article contains the transparent particles in an amount of 0.1 to 1 % by weight. The molded article has a thickness of 1 to 3 mm.

In the molded articles according to the first and second embodiments of the present invention, the average rectilinear light transmittance at the wavelengths from 410 nm to 500 nm is preferably greater than the average rectilinear light transmittance at the wavelengths from 500 nm to 600 nm. With a proviso that T1 represents an average rectilinear light transmittance at the wavelengths from 410 nm to 500 nm and that T2 represents an average rectilinear light transmittance at the wavelengths from 500 nm to 600 nm, T1 - T2 is more preferably 0.5% or greater, and further preferably 0.9% or greater.

In the molded articles according to the first and second embodiments of the present invention, the total light transmittance is preferably 85% or higher, more preferably 90% or higher, and further preferably 91.5% or higher. The resulting molded article can transmit a greater amount of light emitted from a light source. It is therefore possible to prevent a decrease in brightness of light from the light source when the molded article is installed on an optical path of the light source. Eventually, by using the molded article, it is possible to provide a light source-equipped device (a lighting, etc.) which can output light from the light source with higher brightness.

In the molded articles according to the first and second embodiments of the present invention, the degree of dispersion is preferably 20° or less, more preferably 16° or less, further preferably 10° or less, and most preferably 7° or less. The resulting molded article can have an even better coloring effect for transmitted light. Additionally, in the molded articles according to the second and third embodiments of the present invention, the degree of dispersion is preferably 1° or greater, and more preferably 1.5° or greater. The resulting molded article can have an even better coloring effect for transmitted light.

In the molded articles according to the first and second embodiments of the present invention, the coefficient of variation in particle size of the transparent particles is preferably 13% or less. The resulting molded article can have an even better coloring effect for transmitted light. Additionally, the coefficient of variation in particle size of the transparent particles is preferably 7% or greater. This requirement enables efficient production of a molded article.

In the molded articles according to the first and second embodiments of the present invention, the content of the transparent particles is preferably in the range from 0.2 to 1% by weight. The resulting molded article can have an even better coloring effect for transmitted light. Except the above-mentioned arrangements, the molded articles according to the first and second embodiments of the present invention are similar to the molded article described above.

<Lighting cover>

A lighting cover according to the present invention is produced with the molded article made of a light-diffusing resin composition according to the present invention. The lighting cover according to the present invention can reduce dullness of color when an object is illuminated by a lighting apparatus equipped with the lighting cover.

The molded article according to the present invention can be employed as a lighting cover for covering a light source in a lighting apparatus in which the light source is, for example, a fluorescent light, a light emitting diode (LED), or the like. This lighting cover can color transmitted light and can thereby impart a design feature to the lighting apparatus. The shape of the molded article according to the present invention is not particularly limited, and may be selected from a variety of shapes to suit its use. For example, when the molded article according to the present invention is used as a lighting cover, the shape of the molded article may be semicylindrical, cylindrical, flat plate-shaped, domed (hemispherical), pear-shaped, candle flame-shaped (teardrop-shaped), or the like. Regarding the light source for the lighting apparatus to be equipped with the lighting cover, the amount of light is not particularly limited. The light source may be selected widely from a low-intensity light source such as an in-vehicle lighting fitted in an interior wall of an automobile, to a high-intensity light source such as a mercury lamp or an LED that replaces a mercury lamp.

<Front panel for a spotlight>

A front panel for a spotlight according to the present invention is produced with the molded article made of a light-diffusing resin composition according to the present invention. The front panel for a spotlight according to the present invention can reduce dullness of color when an object is illuminated by the spotlight.

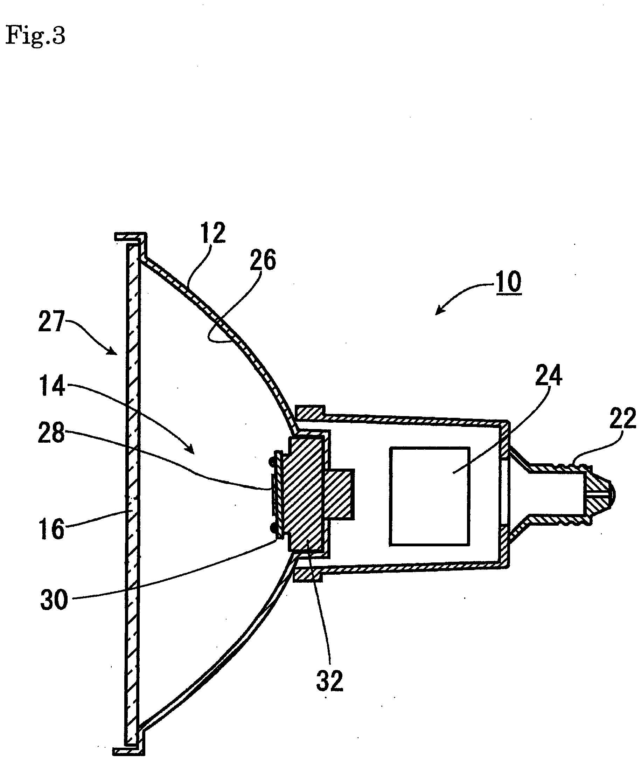

Next, a front panel for a spotlight according to an embodiment of the present invention is described with reference to Fig. 3. Fig. 3 is a sectional view showing a configuration of a spotlight equipped with a front panel according to an embodiment of the present invention.

As shown in Fig. 3, a spotlight 10 includes a concave mirror 12, an LED unit 14, a front panel 16 according to an embodiment of the present invention, a socket 22, and a feed circuit 24.

The concave mirror 12 is a bowl-like member having a light reflecting surface 26 on an inner surface thereof, and has a light emission opening 27 for emitting light from the LED unit 14 to the outside. The shape of the light reflecting surface 26 is not particularly limited, but is preferably a plane of revolution containing a spheroidal surface, in particular a paraboloid of revolution (shaped like a parabolic reflector) with a focus F located inside the concave mirror 12. The material for the concave mirror 12 is not particularly limited, but is preferably a material having a high thermal conductivity (e.g. aluminium) in order to dissipate the heat from the LED unit 14 efficiently. In addition, the external shape of the concave mirror 12 is also curved along the light reflecting surface 26 in this embodiment. However, the external shape of the concave mirror 12 is not particularly limited and may be, for example, a cuboid (a block) having a recess as the light reflecting surface 26. Alternatively, a facet may be employed to provide multiple light reflecting surfaces 26.

The LED unit 14 includes an LED 28, an LED holder 30, and a mounting member 32.

The LED 28 is a semiconductor which receives electric power from the feed circuit 24 and emits light. In this embodiment, the LED 28 is accommodated inside the concave mirror 12 and attached to the LED holder 30. The LED employed in this embodiment is a COB (Chip-On-Board) LED in which an LED element is directly mounted on the pattern formed on the board. Alternatively, an LED element may be mounted on a circuit pattern formed on the surface of the LED holder 30. In the example shown in Fig. 3, the spotlight 10 is equipped with one LED 28. However, the number of LED 28 for one spotlight 10 is not particularly limited, and is suitably selected to enable radiation of sufficient luminous flux as a replacement of a halogen light.

The LED holder 30 is a rectangular plate-like member and keeps the LED 28 at a predetermined position on the front surface of the LED holder 30. The LED holder 30 made of a material having a high thermal conductivity (e.g. aluminium) is preferable for efficient dissipation of heat generated by the LED 28.

The mounting member 32 is attached to an end of the LED holder 30. Preferably, the mounting member 32 is also made of a material having a high thermal conductivity. The LED holder 30 and the mounting member 32 are prepared as separate pieces in this embodiment, but may be prepared as a single piece.

The front panel 16 is provided across the light emission opening 27 of the concave mirror 12. The front panel 16 is configured to cover the light emission opening 27 entirely in this embodiment, but may be configured to cover only a part of the light emission opening 27. The front panel 16 is arranged to diffuse and transmit the light emitted from the LED 28. The diffusion characteristics of the front panel 16 is important in order to impart desired light distribution characteristics to the light emitted from the spotlight 10. For this reason, the front panel 16 having suitable diffusion characteristics is employed in consideration of the light distribution characteristics for the light emitted from the LED 28 and reflected by the light reflecting surface 26.

The socket 22 is attached to an end opposite to the front panel 16 and is formed in a prescribed type/shape such as E17 or E11, to be screwed into an existing lighting apparatus.

The feed circuit 24 converts the general electric power supplied to the socket 22 into a suitable voltage/current for the LED 28 and then supplies the converted power to the LED 28. The socket 22 and the LED 28 are electrically connected to each other by a lead wire or the like (not shown).

<Other uses of the molded article>

The molded article according to the present invention, which can color transmitted light, may be also utilized as a daylighting material (e.g. a windowpane) with a design feature, a shelf board with a design feature, a (translucent) partition with a design feature, a window member in a greenhouse for plant cultivation, or in other like use.

<Partition>

The partition according to the present invention includes the molded article according to the present invention. The partition according to the present invention can color transmitted light in blue or yellow-green and can thereby create a space with a calm atmosphere.

The partition according to the present invention is equipped with a plate-shaped molded article (a light diffusion plate) made of light-diffusing resin composition according to the present invention. The plate-shaped molded article may be produced not only by a method for producing a relatively small plate-shaped molded article by injection molding, but also by a method for producing a large plate-shaped molded article by extrusion molding such as T-die extrusion molding.

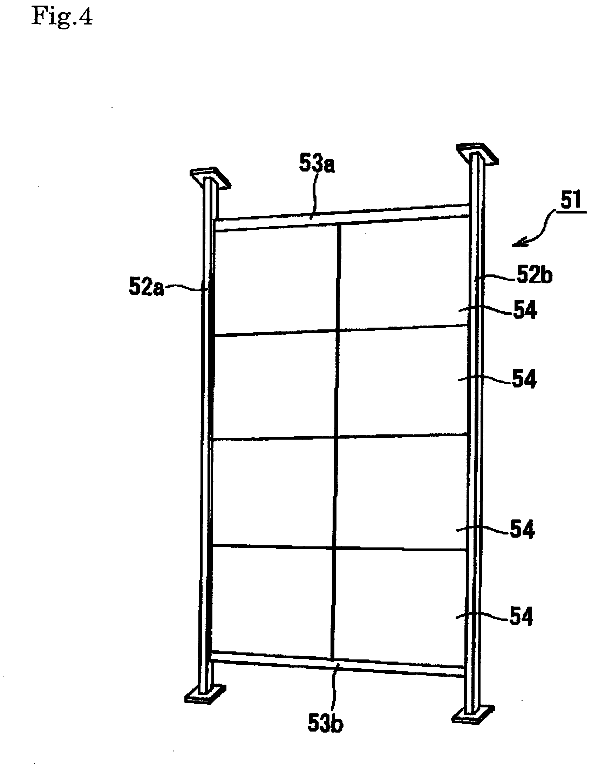

Next, an embodiment of the present invention is described with reference to Fig. 4. Fig. 4 is a perspective view of a partition according to an embodiment of the present invention.

A partition 51 according to this embodiment includes two poles 52a, 52b vertically standing between the room floor and the ceiling, two bars 53a, 53b horizontally connecting the poles 52a, 52b slightly below the ceiling and slightly above the floor, and a plurality of light diffusion plates 54 made of the molded article according to the present invention, fitted in between the poles 52a, 52b and the bars 53a, 53b in a lattice pattern. In the example of Fig. 4, eight light diffusion plates 54 are arranged in two columns and four rows. However, the number of light diffusion plates 54 is not particularly limited and may be suitably changed.

<Daylighting material>

The daylighting material according to the present invention includes the molded article according to the present invention. The daylighting material according to the present invention has a good daylighting ability and an appropriate light-diffusing property. Therefore, when employed, for example, as a roof member or a side panel for a terrace, a balcony, a carport, or a greenhouse for plant cultivation, the daylighting material can ensure sufficient brightness even in cloudy or rainy weather. Besides, owing to the light-diffusing property, a person may look at the sun through the daylighting material without blinding brightness. Further, since the daylighting material can color transmitted light in blue or yellow-green, it is possible to create a space with a calm atmosphere. Hence, the daylighting material according to the present invention is suitable for a roof member or a side panel for a terrace, a balcony, a carport, or the like.

The daylighting material according to the present invention is equipped with a plate-shaped molded article (a light diffusion plate) made of light-diffusing resin composition according to the present invention. The plate-shaped molded article may be produced not only by a method for producing a relatively small plate-shaped molded article by injection molding, but also by a method for producing a large plate-shaped molded article by extrusion molding such as T-die extrusion molding.

[Examples]

Hereinafter, the present invention is described by way of Examples and Comparative Examples, which are not intended to limit the invention.

Regarding the transparent particles employed in the following Examples and Comparative Examples, the volume-average particle size, the coefficient of variation in particle size, and the refractive index were measured by the procedures described below. Regarding the molded articles obtained in the following Examples and Comparative Examples, various characteristics were measured or evaluated by the procedures described below.

<Procedure for measuring the volume-average particle size of the transparent particles>

To obtain the volume-average particle size of the transparent particles, the volume of the transparent particles was obtained from changes in conductivity of the electrolyte solution while the transparent particles were allowed to pass through an electrolyte solution which was filled in pores having a diameter of 20 to 400 $\mu$m. Based on the obtained volume, the volume-average particle size of the transparent particles was calculated. Specifically, the volume-average particle size of the transparent particles was a volume-average particle size (an arithmetic average size in the volume-based particle size distribution) measured with use of a Coulter particle size distribution analyzer "Multisizer III" (manufactured by Beckman Coulter, Inc.). Before the measurement, the "Multisizer III" was calibrated with use of an aperture which matched the size of particles to be measured, according to REFERENCE MANUAL FOR THE COULTER MULTISIZER (1987) published by Coulter Electronics Limited.

Specifically, a dispersion was prepared dispersing 0.1 gram of transparent particles in 10 ml of a solution of 0.1%-by-weight non-ionic surfactant, by using a touch mixer and ultrasonically. A beaker, an attachment to the "Multisizer III" to be set in the main body, was filled with an electrolyte solution for measurement "ISOTON® II" (manufactured by Beckman Coulter, Inc.). While the dispersion was stirred gently, the dispersion was added dropwise by a dropper until the reading of the concentration meter on the main body screen of the "Multisizer III" reached around 10%. Next, Aperture size (diameter), Current (aperture current), Gain (gain), Polarity (polarity of internal electrode) were input on the main body of the "Multisizer III" according to REFERENCE MANUAL FOR THE COULTER MULTISIZER (1987) published by Coulter Electronics Limited. Thereafter, the volume-based particle size distribution was measured manually (in manual mode). During the measurement, stirring was applied in the beaker so gently as not to include air bubbles. The measurement was ended when particle size distribution of 100,000 transparent particles were measured. The volume-average particle size of the transparent particles was an average particle size of the measured 100,000 particles, which represented an arithmetic average size of the volume-based particle size distribution.

<Procedure for calculating the coefficient of variation in particle size of the transparent particles>

The coefficient of variation in particle size of the transparent particles (hereinafter called "CV value") was calculated by assigning, to the following formula, the standard deviation ($\sigma$) and the volume-average particle size (x) obtained in the above-described measurement of the volume-based particle size distribution.

$$\text{CV value (\%)} = (\sigma/\text{x}) \times 100$$

<Procedure for measuring the refractive index of the transparent particles>

The refractive index of the transparent particles was measured by the Becke line test. To measure the refractive index by the Becke line test, transparent particles were placed on a glass slide, and refractive index liquids were dropped thereon (Cargille refractive index liquids, manufactured by Cargille Laboratories and having refractive indexes in a range around an expected refractive index, e.g. from 1.480 to 1.596, were kept available by 0.002 increments in refractive index). After the transparent particles and each refractive index liquid were mixed well, the profile of the transparent particles was observed from above by an optical microscope while the glass slide was irradiated from below by a high-pressure sodium lamp (model "NX35", center wavelength 589 nm) manufactured by Iwasaki Electric Co., Ltd.

The observation by the optical microscope could be conducted without a particular problem at any magnification as far as the profile of the transparent particles was recognizable. Having said that, a magnification of about 500x would be suitable for observation of transparent particles having a particle size of 5 $\mu$m. When the refractive index of a refractive index liquid got closer to the refractive index of the transparent particles, it became harder to see the profile of the transparent particles. Hence, the refractive index of a refractive index liquid at which it was impossible or hardest to see the profile of the transparent particles in that refractive index liquid was deemed to be equal to the refractive index of the transparent particles. If the transparent particles in a refractive index liquid looked similar to those in another refractive index liquid, with a refractive index difference of 0.002 between the two refractive index liquids, an intermediate value between the two refractive index liquids was regarded as the refractive index of the transparent particles. For example, if the transparent particles observed in a refractive index liquid having a refractive index of 1.554 looked similar to those observed in another refractive index liquid having a refractive index of 1.556, the intermediate value of these refractive index liquids, 1.555, was determined as the refractive index of the transparent particles. For this measurement, the test room temperature was conditioned between 23°C and 27°C.

<Procedure for evaluation of transmitted light through the molded article>

The color of light transmitted through a double-capped LED lamp, neutral white light color, type 40 (manufactured by IRIS Ohyama Inc., trade name "ECOLUX® HE LDFL2000NF-H50") was visually evaluated.

<Procedure for measuring the total light transmittance and the haze through the molded article>

The total light transmittance of the molded article was measured according to JIS K 7361-1. Specifically, the total light transmittance and the haze of the molded article were measured using a haze meter "NDH-4000" manufactured by Nippon Denshoku Industries Co., Ltd. The number of measurement samples n was 10. For each of the 10 measurement samples, an average total light transmittance (%) and an average haze (%) were calculated and regarded as the total light transmittance (%) and the haze (%) of the molded article.

<Procedure for measuring the degree of dispersion (D50) of the molded article>

A degree of dispersion (D50) of the molded article was defined as a transmission angle at which the light transmittance was 50% of the rectilinear light transmittance when a surface of the molded article was irradiated from a direction normal to the surface. The degree of dispersion (D50) was obtained with use of an automatic goniophotometer ("Goniophotometer GP-200" manufactured by Murakami Color Research Laboratory Co., Ltd.) by the following procedure.

The molded article which was placed 75 cm away from a light source of the automatic goniophotometer. From the light source, rectilinear light was emitted to the molded article, in a direction normal to the surface of the molded article. The intensity of light transmitted through the molded article was measured by a movable photodetector, with a light-receiving angle being changed. The measured intensity was converted into a transmittance, which was plotted on a graph in relation to the light-receiving angle (transmission angle) relative to the direction normal to the surface of the molded article. An angle (transmission angle) at which the light transmittance (a rectilinear light transmittance; a light transmittance when the transmission angle was 0°) was 50% of the light transmittance in the direction normal to the surface of the molded article was obtained on this graph. This angle (transmission angle) was called degree of dispersion (D50), whose unit was "° (degree)". A greater degree of dispersion (D50) meant a better light diffusion property.

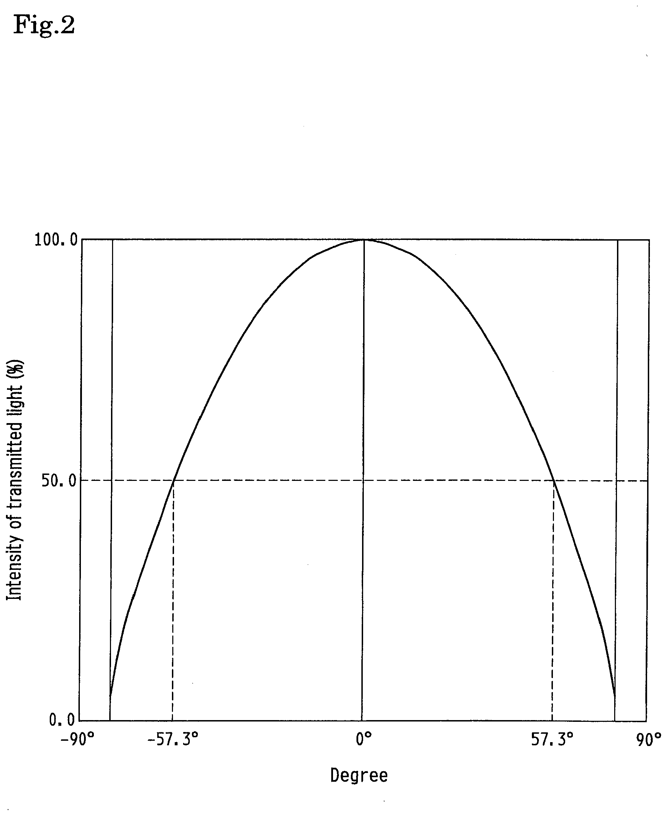

Fig. 2 concerns an example where the intensity of light transmitted through the molded article was measured with use of the automatic goniophotometer. In this graph, the vertical axis represents a relative value of the intensity of transmitted light, and perpendicular lines were drawn from points plotted at the intensity of 50% to obtain intersections with the horizontal axis. The horizontal axis represents a degree (°), called degree of dispersion (D50). According to the measurement result shown in Fig. 2, the degree of dispersion (D50) was 57.3°. The degree of dispersion (D50) was an arithmetic average of two absolute values on the left side and the right side of the origin 0° on the horizontal axis (absolute values of two angles at the transmitted light intensity of 50%).

<Procedure for measuring the spectral rectilinear light transmittance of the molded article >

A measurement sample of the molded article was left still for one hour or longer, in a constant temperature/humidity room at a temperature of 20°C and a relative humidity of 65%. Later, the measurement sample was subjected to measurement of spectral luminous intensity.

The rectilinear light transmittance was measured at wavelengths from 300 nm to 800 nm in the constant temperature/humidity room conditioned at a temperature of 20°C and a relative humidity of 65%, with the measurement sample being set in a UV-visible spectrophotometer (model number "UV-2450" manufactured by Shimadzu Corporation) to which an integrating sphere was not attached. As a specific procedure, a film holder (an attachment to the UV-visible spectrophotometer) was set on the UV-visible spectrophotometer at the beginning. Next, the UV-visible spectrophotometer was calibrated such that the light transmittance (the intensity of transmitted light) at the wavelength of 500 nm was 100%. After the calibration, the spectral rectilinear light transmittance was measured at the wavelengths from 300 nm to 800 nm by the UV-visible spectrophotometer.

For this measurement, following measurement conditions and parameters for the UV-visible spectrophotometer (device parameters) were applied.

(Measurement Conditions)

- Measurement wavelength range: 300 nm to 800 nm
- Scan speed: medium
- Sampling pitch: 1 nm
- Measurement mode: single

(Device Parameters)

- Photometric value: transmission
- Slit width: 2.0 mm
- Light source switching wavelength: 360 nm
- S/R exchange: normal

<Procedure for calculating the average rectilinear light transmittance and the value of T1 - T2 for the molded article in a specific wavelength region>

The average rectilinear light transmittance of the molded article in a specific wavelength region was obtained by calculating an arithmetic average of rectilinear light transmittances measured at wavelengths within a specific wavelength region in the spectral transmittance measured by the above measurement procedure. In this manner, the average rectilinear light transmittances at wavelengths from 410 to 500 nm, from 500 to 600 nm, from 435 to 480 nm (blue region), from 500 to 560 nm (green region), from 580 to 595 nm (yellow region), and from 610 to 750 nm (red region) were calculated. From the average rectilinear light transmittance at the wavelengths from 410 nm to 500 nm (T1), the average rectilinear light transmittance at the wavelengths from 500 nm to 600 nm (T2) was subtracted to obtain the value of T1 - T2.

<Procedure for evaluating the average rectilinear light transmittance of the molded article in the blue region, the green region, and the red region>

The average rectilinear light transmittances at the wavelengths from 435 to 480 nm (blue region), from 500 to 560 nm (green region), and from 610 to 750 nm (red region), measured by the above calculation procedure, were taken as B (%), G (%), and R (%), respectively. The average rectilinear light transmittance at the wavelengths from 580 to 595 nm (yellow region), measured by the above calculation procedure, was taken as Y (%). The relations of B to Y, G to Y, and R to Y were evaluated in following three grades.
> Y: greater than (Y + 0.1)
≈ Y: not smaller than and not greater than Y by 0.1
< Y: smaller than (Y - 0.1)

<Example 1>

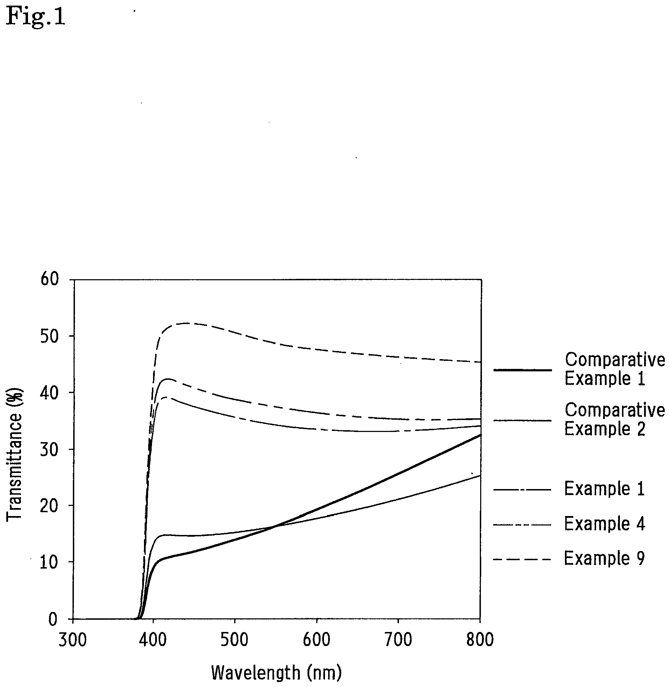

The thermoplastic resin was a polycarbonate resin (manufactured by Mitsubishi Engineering-Plastics Corporation, trade name "Iupilon S2000UR", refractive index: 1.58). The transparent particles were crosslinked methacrylic resin particles (a polymer made from a monomer mixture containing 70% by weight of methyl methacrylate and 30% by weight of ethylene glycol dimethacrylate) having a volume-average particle size of 5.1 $\mu$m, a coefficient of variation in particle size (CV value) of 11.8%, and a refractive index of 1.49. The crosslinked methacrylic resin particles accounted for 0.25% by weight (hereinafter called "particle concentration") in 100% by weight of the total of the polycarbonate resin and the crosslinked methacrylic resin particles. The ingredients were kneaded by an extruder to give a light-diffusing resin composition, in the form of pellets, containing the crosslinked methacrylic resin particles.
This light-diffusing resin composition was shaped by an injection molding machine to provide a flat plate-shaped molded article having a planar dimension of 50 mm × 50 mm and a thickness of 1 mm. For this molded article, the color of transmitted light was visually evaluated and various characteristics were measured. The results are shown in Table 1, along with the volume-average particle size of the transparent particles, the difference in the refractive index of the transparent particles and that of the thermoplastic resin, the particle concentration, and the thickness of the molded article. The spectral transmittance (rectilinear transmittance) of the molded article is shown in Fig. 1. This molded article could transmit a satisfactory amount of light and could serve as a filter material for coloring transmitted light in blue.

<Examples 2 and 3>

Except that the particle concentration and the thickness of the molded article were changed as indicated in Table 1, flat plate-shaped molded articles were manufactured in the same manner as in Example 1. For these molded articles, the color of transmitted light was visually evaluated and various characteristics were measured. The results are shown in Table 1. These molded articles could transmit a satisfactory amount of light and could serve as a filter material for coloring transmitted light in blue.

<Example 4>

As the transparent particles, the crosslinked methacrylic resin particles having a volume-average particle size of 5.1 $\mu$m were replaced by crosslinked methacrylic resin particles (a polymer made from a monomer mixture containing 95% by weight of methyl methacrylate and 5% by weight of ethylene glycol dimethacrylate) having a volume-average particle size of 6.0 $\mu$m, a coefficient of variation in particle size (CV value) of 12.8%, and a refractive index of 1.49. Except for this change, a flat plate-shaped molded article was manufactured in the same manner as in Example 1.
For this molded article, the color of transmitted light was visually evaluated and various characteristics were measured. The results are shown in Table 1. The spectral transmittance (rectilinear transmittance) of the molded article is shown in Fig. 1. This molded article could transmit a satisfactory amount of light and could serve as a filter material for coloring transmitted light in blue.

<Examples 5 to 8>

Except that the particle concentration and the thickness of the molded article were changed as indicated in Table 1, flat plate-shaped molded articles were manufactured in the same manner as in Example 4. For these molded articles, the color of transmitted light was visually evaluated and various characteristics were measured. The results are shown in Table 1. These molded articles could transmit a satisfactory amount of light and could serve as a filter material for coloring transmitted light in blue.

<Example 9>

As the transparent particles, the crosslinked methacrylic resin particles having a volume-average particle size of 5.1 µm were replaced by crosslinked methacrylic resin particles (a polymer made from a monomer mixture containing 90% by weight of methyl methacrylate and 10% by weight of ethylene glycol dimethacrylate) having a volume-average particle size of 8.1 µm, a coefficient of variation in particle size (CV value) of 7.7%, and a refractive index of 1.49. Except for this change, a flat plate-shaped molded article was manufactured in the same manner as in Example 1.
For this molded article, the color of transmitted light was visually evaluated and various characteristics were measured. The results are shown in Table 1. The spectral transmittance (rectilinear transmittance) of the molded article is shown in Fig. 1. This molded article could transmit a satisfactory amount of light and could serve as a filter material for coloring transmitted light in yellow-green.

<Examples 10 to 12>

Except that the particle concentration and the thickness of the molded article were changed as indicated in Table 1, flat plate-shaped molded articles were manufactured in the same manner as in Example 9. For these molded articles, the color of transmitted light was visually evaluated and various characteristics were measured. The results are shown in Table 1. These molded articles could transmit a satisfactory amount of light and could serve as a filter material for coloring transmitted light in yellow-green.

<Comparative Example 1>

As the transparent particles, the crosslinked methacrylic resin particles having a volume-average particle size of 5.1 µm were replaced by crosslinked methacrylic resin particles (a polymer made from a monomer mixture containing 70% by weight of methyl methacrylate and 30% by weight of ethylene glycol dimethacrylate) having a volume-average particle size of 2.5 µm, a coefficient of variation in particle size (CV value) of 12.3%, and a refractive index of 1.49. Except for this change, a flat plate-shaped molded article was manufactured in the same manner as in Example 1.
For this molded article, the color of transmitted light was visually evaluated and various characteristics were measured. The results are shown in Table 1. The spectral transmittance (rectilinear transmittance) of the molded article is shown in Fig. 1. This molded article had a total light transmittance of 92.88%, a haze of 65.8%, and a degree of dispersion of 1.85°, and colored transmitted light in orange.

<Comparative Example 2>

As the transparent particles, the crosslinked methacrylic resin particles having a volume-average particle size of 5.1 µm were replaced by crosslinked methacrylic resin particles (a polymer made from a monomer mixture containing 70% by weight of methyl methacrylate and 30% by weight of ethylene glycol dimethacrylate) having a volume-average particle size of 3.1 µm, a coefficient of variation in particle size (CV value) of 11.5%, and a refractive index of 1.49. Except for this change, a flat plate-shaped molded article was manufactured in the same manner as in Example 1.
For this molded article, the color of transmitted light was visually evaluated and various characteristics were measured. The results are shown in Table 1. The spectral transmittance (rectilinear transmittance) of the molded article is shown in Fig. 1. This molded article colored transmitted light in pink.

<Comparative Example 3>

As the transparent particles, the crosslinked methacrylic resin particles having a volume-average particle size of 5.1 µm were replaced by crosslinked methacrylic resin particles (a polymer made from a monomer mixture containing 90% by weight of methyl methacrylate and 10% by weight of ethylene glycol dimethacrylate) having a volume-average particle size of 4.5 µm, a coefficient of variation in particle size (CV value) of 10.2%, and a refractive index of 1.49. The particle concentration of the transparent particles was changed to 2.00% by weight. Except for these changes, a flat plate-shaped molded article was manufactured in the same manner as in Example 1.
For this molded article, the color of transmitted light was visually evaluated and various characteristics were measured. The results are shown in Table 1, along with the volume-average particle size of the transparent particles, the difference in the refractive index of the transparent particles and that of the thermoplastic resin, the particle concentration, and the thickness of the molded article.
This molded article had a total light transmittance of 86.56%, a haze of 98.8%, and a degree of dispersion of 27.0°. The molded article could transmit a satisfactory amount of light, but did not impart any color to the transmitted light. This was because the molded article diffused light too strongly to exert its coloring effect.

<Comparative Example 4>

Except that the particle concentration of the transparent particles was changed to 2.00% by weight, a flat plate-shaped molded article was manufactured in the same manner as in Example 1. For this molded article, the color of transmitted light was visually evaluated and various characteristics were measured. The results are shown in Table 1, along with the volume-average particle size of the transparent particles, the difference in the refractive index of the transparent particles and that of the thermoplastic resin, the particle concentration, and the thickness of the molded article. This molded article could transmit a satisfactory amount of light, but did not impart any color to the transmitted light. This was because the molded article diffused light too strongly to exert its coloring effect.

<Comparative Example 5>

Except that the particle concentration of the transparent particles was changed to 2.00% by weight, a flat plate-shaped molded article was manufactured in the same manner as in Example 4. For this molded article, the color of transmitted light was visually evaluated and various characteristics were measured. The results are shown in Table 1, along with the volume-average particle size of the transparent particles, the difference in the refractive index of the transparent particles and that of the thermoplastic resin, the particle concentration, and the thickness of the molded article. This molded article could transmit a satisfactory amount of light, but did not impart any color to the transmitted light. This was because the molded article diffused light too strongly to exert its coloring effect.

<Comparative Example 6>

Except that the particle concentration of the transparent particles was changed to 2.00% by weight and that the thickness of the molded article was changed to 2 mm, a flat plate-shaped molded article was manufactured in the same manner as in Example 9. For this molded article, the color of transmitted light was visually evaluated and various characteristics were measured. The results are shown in Table 1, along with the volume-average particle size of the transparent particles, the difference in the refractive index of the transparent particles and that of the thermoplastic resin, the particle concentration, and the thickness of the molded article. This molded article did not transmit a satisfactory amount of light, and did not impart any color to the transmitted light. This was because the molded article diffused light too strongly to exert its coloring effect.

<Comparative Example 7>

As the transparent particles, the crosslinked methacrylic resin particles having a volume-average particle size of 5.1 $\mu$m and a coefficient of variation in particle size (CV value) of 11.8% were replaced by crosslinked methacrylic resin particles (a polymer made from a monomer mixture containing 95% by weight of methyl methacrylate and 5% by weight of ethylene glycol dimethacrylate) having a volume-average particle size of 5.1 $\mu$m, a coefficient of variation in particle size (CV value) of 35.6%, and a refractive index of 1.49. The particle concentration of the transparent particles was changed to 0.50% by weight. Except for these changes, a flat plate-shaped molded article was manufactured in the same manner as in Example 1.

For this molded article, the color of transmitted light was visually evaluated and various characteristics were measured. The results are shown in Table 1. This molded article did not impart any color to the transmitted light.

[Table 1]

| | Volume-average particle size (μm) | CV value (%) | Difference in refractive index | Particle concentration (wt%) | Thickness (mm) | Color of transmitted light | Total light transmittance (%) | Haze (%) | Degree of dispersion (°) |
|---|---|---|---|---|---|---|---|---|---|
| Example 1 | 5.1 | 11.8 | 0.09 | 0.25 | 1 | blue | 92.40 | 68.3 | 1.9 |
| Example 2 | 5.1 | 11.8 | 0.09 | 0.25 | 3 | blue | 94.37 | 92.3 | 2.75 |
| Example 3 | 5.1 | 11.8 | 0.09 | 0.50 | 1 | blue | 94.36 | 88.5 | 2.35 |
| Example 4 | 6.0 | 12.8 | 0.09 | 0.25 | 1 | blue | 92.08 | 62.1 | 1.85 |
| Example 5 | 6.0 | 12.8 | 0.09 | 0.25 | 3 | blue | 94.04 | 89.7 | 2.0 |
| Example 6 | 6.0 | 12.8 | 0.09 | 0.50 | 1 | blue | 93.90 | 85.0 | 2.2 |
| Example 7 | 6.0 | 12.8 | 0.09 | 0.50 | 2 | blue | 94.27 | 94.7 | 3.9 |
| Example 8 | 6.0 | 12.8 | 0.09 | 1.00 | 1 | blue | 94.40 | 95.6 | 6.2 |
| Example 9 | 8.1 | 7.7 | 0.09 | 0.25 | 1 | yellow-green | 91.58 | 46.4 | 1.8 |
| Example 10 | 8.1 | 7.7 | 0.09 | 0.25 | 3 | yellow-green | 93.41 | 78.0 | 2.25 |
| Example 11 | 8.1 | 7.7 | 0.09 | 0.50 | 1 | yellow-green | 92.82 | 65.8 | 1.85 |
| Example 12 | 8.1 | 7.7 | 0.09 | 1.00 | 1 | yellow-green | 94.13 | 87.9 | 2.20 |
| Comp. Ex. 1 | 2.5 | 12.3 | 0.09 | 0.25 | 1 | orange | 92.88 | 65.8 | 1.85 |
| Comp. Ex. 2 | 3.1 | 11.5 | 0.09 | 0.25 | 1 | pink | 93.41 | 78.0 | 1.95 |
| Comp. Ex. 3 | 4.5 | 10.2 | 0.09 | 2.00 | 1 | not colored | 86.56 | 98.8 | 27.0 |
| Comp. Ex. 4 | 5.1 | 11.8 | 0.09 | 2.00 | 1 | not colored | 89.37 | 98.6 | 22.7 |
| Comp. Ex. 5 | 6.0 | 12.8 | 0.09 | 2.00 | 1 | not colored | 90.13 | 98.4 | 20.8 |
| Comp. Ex. 6 | 8.1 | 7.7 | 0.09 | 2.00 | 2 | not colored | 83.91 | 98.7 | 25.3 |
| Comp. Ex. 7 | 5.1 | 35.6 | 0.09 | 0.50 | 1 | not colored | 93.47 | 91.8 | 4.75 |

In the column "Color of transmitted light",
"not colored" means coloring of transmitted light was not visually recognized.

EP 3 358 378 B1

Table 1 (continued)

| | T1 (%) | T2 (%) | T1−T2 (%) | B (%) | G (%) | Y (%) | R (%) | Evaluation |
|---|---|---|---|---|---|---|---|---|
| Example 1 | 37.4 | 34.4 | 3.0 | 37.3 | 34.8 | 33.7 | 33.3 | B>Y, G>Y, R<Y |
| Example 2 | 14.4 | 12.7 | 1.7 | 14.3 | 12.8 | 12.5 | 12.9 | B>Y, G>Y, R>Y |
| Example 3 | 17.1 | 15.0 | 2.1 | 17.0 | 15.2 | 14.7 | 14.8 | B>Y, G>Y, R≈Y |
| Example 4 | 40.5 | 37.4 | 3.1 | 40.4 | 37.9 | 36.5 | 35.5 | B>Y, G>Y, R<Y |
| Example 5 | 17.5 | 15.0 | 2.5 | 17.3 | 15.3 | 14.5 | 14.3 | B>Y, G>Y, R<Y |
| Example 6 | 22.5 | 19.5 | 3.0 | 22.3 | 19.9 | 18.8 | 18.2 | B>Y, G>Y, R<Y |
| Example 7 | 10.4 | 9.0 | 1.4 | 10.3 | 9.13 | 8.79 | 8.87 | B>Y, G>Y, R>Y |
| Example 8 | 7.3 | 6.4 | 0.9 | 7.20 | 6.50 | 6.30 | 6.50 | B>Y, G>Y, R<Y |
| Example 9 | 51.9 | 48.0 | 3.9 | 51.9 | 49.4 | 47.8 | 46.6 | B>Y, G>Y, R<Y |
| Example 10 | 31.1 | 27.5 | 3.6 | 31.5 | 28.2 | 26.3 | 24.8 | B>Y, G>Y, R<Y |
| Example 11 | 35.1 | 31.6 | 3.5 | 35.4 | 32.3 | 30.4 | 28.8 | B>Y, G>Y, R<Y |
| Example 12 | 16.0 | 13.7 | 2.3 | 16.1 | 14.1 | 12.9 | 12.0 | B>Y, G>Y, R<Y |
| Comp. Ex. 1 | 12.2 | 16.5 | -4.3 | 12.2 | 15.4 | 18.6 | 24.4 | B<Y, G<Y, R>Y |
| Comp. Ex. 2 | 14.8 | 16.4 | -1.6 | 14.8 | 15.9 | 17.4 | 20.5 | B<Y, G<Y, R>Y |
| Comp. Ex. 3 | 1.1 | 1.7 | -0.7 | 1.10 | 1.31 | 1.45 | 1.64 | B<Y, G<Y, R>Y |
| Comp. Ex. 4 | 1.5 | 1.7 | -0.3 | 1.49 | 1.70 | 1.85 | 2.05 | B<Y, G<Y, R>Y |
| Comp. Ex. 5 | 1.8 | 2.0 | -0.2 | 1.83 | 1.99 | 2.13 | 2.34 | B<Y, G<Y, R>Y |
| Comp. Ex. 6 | 1.4 | 1.6 | -0.2 | 1.40 | 1.56 | 1.67 | 1.81 | B<Y, G<Y, R>Y |
| Comp. Ex. 7 | 7.7 | 8.3 | -0.6 | 7.71 | 8.16 | 8.67 | 9.69 | B<Y, G<Y, R>Y |

In the molded articles obtained in Examples 1 to 12, the local maximum of the spectral transmittance at the wavelengths from 380 to 800 nm was within the range of 380 to 500 nm. On the other hand, in the molded articles obtained in Comparative Examples 1 and 2, the local maximum of the spectral transmittance at the wavelengths from 380 to 800 nm was 800 nm.

As mentioned above, the molded articles obtained in Comparative Examples 1 and 2 colored transmitted light in orange or pink, and the molded articles obtained in Comparative Examples 3 to 7 did not impart any color to transmitted light. In contrast, the molded articles obtained in Examples 1 to 12 colored transmitted light in blue or yellow-green.

Further as mentioned above, the molded articles made of the light-diffusing resin compositions in Examples 1 to 12 and Comparative Examples 1 to 7 were common in following respects: each of the molded articles had a thickness of 1 to 3 mm; each of the molded articles contained a thermoplastic resin and transparent particles which were dispersed in the thermoplastic resin and which had a particle size of 1 to 100 µm; and the difference between the refractive index of the thermoplastic resin and that of the transparent particles was in the range of 0.02 to 0.1. Now, a comparison of the Examples and the Comparative Examples is made by referring to their differences. In Comparative Examples 1 and 2, in which the volume-average particle size of the transparent particles was less than 4 µm, the resulting molded articles colored transmitted light in orange or pink. In Comparative Examples 3 to 6, in which the content of the transparent particles was over 1% by weight, the resulting molded articles did not impart any color to transmitted light. In Comparative Example 7, in which the coefficient of variation in particle size (CV value) was over 15%, the resulting molded article did not impart any color to transmitted light, either. On the other hand, in Examples 1 to 8, the volume-average particle size of the transparent particles was not smaller than 4.5 $\mu$m and not greater than 7 $\mu$m, the coefficient of variation in particle size (CV value) was from 5 to 15%, and the content of the transparent particles was from 0.1 to 1% by weight. The resulting molded articles colored transmitted light in blue. In Examples 9 to 12, the volume-average particle size of the transparent particles was over 7 $\mu$m and not greater than 9 $\mu$m, the coefficient of variation in particle size (CV value) was from 5 to 15%, and the content of the transparent particles was 0.1 to 1% by weight. The resulting molded articles colored transmitted light in yellow-green.

<Example 13> (Production example of a lighting cover)

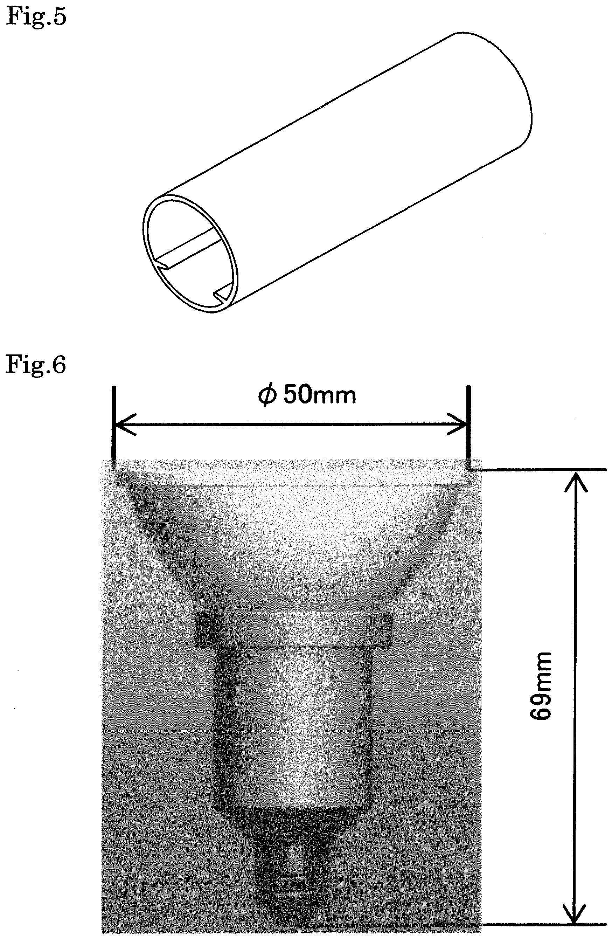

Using a light-diffusing resin composition in the form of pellets, similar to the one used in the manufacture of the molded article in Example 1, a cylindrical LED lamp cover (1 mm in thickness) as shown in Fig. 5 was produced by extrusion molding. The cylindrical LED lamp cover was attached to the main body (the part except the cover) of a commercially available 40W double-capped LED lighting device (manufactured by ELEVAM corporation, model number "FWK40NSMSP5-72V") to produce an LED lighting device.

Next, the LED lighting device equipped with the LED lamp cover of this Example, and the commercially available LED lighting device (manufactured by ELEVAM corporation, model number "FWK40NSMSP5-72V") were lit up to illuminate meat and vegetables. Visual inspection of the color of the illuminated meat and vegetables confirmed that the LED lighting device equipped with the LED lamp cover of this Example reduced dullness of color in comparison with the commercially available LED lighting device. In the molded article of Example 1, the average rectilinear light transmittances at the wavelengths from 435 to 480 nm (blue region) and at the wavelengths from 500 to 560 nm (green region) were higher than the average rectilinear light transmittance at the wavelengths from 580 to 595 nm (yellow region). This is probably the reason why the molded article could decrease the yellow component light which was an intermediate color and could thereby reduce dullness of color of the objects.

<Example 14> (Production example of a front panel for a spotlight)

A light-diffusing resin composition in the form of pellets, similar to the one used in the manufacture of the molded article in Example 1, was injection molded into a disc having a diameter of 50 mm and a thickness of 1 mm for use as a front panel for a spotlight. The front panel was attached to the light emission surface of a commercially available LED spotlight (manufactured by Apple Tree, Inc., model number "HLA527S11", total luminous flux 400 lm, color temperature 2700 K) to produce a spotlight (Fig. 6) similar to the one shown in Fig. 3.

Next, the commercially available LED spotlight was lit up, with and without the front panel of this Example being attached, to illuminate meat and vegetables. Visual inspection of the color of the illuminated meat and vegetables confirmed that the LED spotlight equipped with the front panel of this Example reduced dullness of color in comparison with the LED spotlight without the front panel.

<Example 15> (Production example of a partition)

A light-diffusing resin composition in the form of pellets, similar to the one used in the manufacture of the molded article in Example 5, was injection molded to produce 45 light diffusion plates each having a length of 150 mm, a width of 150 mm, and a thickness of 3 mm. The 45 light diffusion plates were arranged in a lattice pattern of five columns and nine rows to produce a partition having a length of 1500 mm and a width of 800 mm, similar to the one shown in Fig. 4 (the number of light diffusion plates was different).

With the partition being set up in front of a window in a room, outside light was let in through the partition. From outside, it was impossible to see inside the room. From inside, the outside light looked blue, which created a calm atmosphere.

<Example 16> (Production example of a partition)

A light-diffusing resin composition in the form of pellets, similar to the one used in the manufacture of the molded article in Example 10, was injection molded to produce 45 light diffusion plates each having a length of 150 mm, a width of 150 mm, and a thickness of 3 mm. The 45 light diffusion plates were arranged in a lattice pattern of five columns and nine rows to produce a partition having a length of 1500 mm and a width of 800 mm, similar to the one shown in Fig. 4 (the number of light diffusion plates was different).

With the partition being set up in front of a window in a room, outside light was let in through the partition. From outside, it was impossible to see inside the room. From inside, the outside light looked yellow-green, which created a calm atmosphere.

<Example 17> (Production example of a daylighting material)

A light-diffusing resin composition in the form of pellets, similar to the one used in the manufacture of the molded article in Example 5, was injection molded to produce a light diffusion plate having a length of 150 mm, a width of 150 mm, and a thickness of 3 mm. The light diffusion plate was fitted in a ceiling of a terrace as a daylighting material, and outside light was let in through the daylighting material. From the outside of the terrace, it was impossible to see inside the terrace. From the inside of the terrace, the outside light looked blue, which created a calm atmosphere.

<Example 18> (Production example of a daylighting material)

A light-diffusing resin composition in the form of pellets, similar to the one used in the manufacture of the molded article in Example 10, was injection molded to produce a light diffusion plate having a length of 150 mm, a width of 150 mm, and a thickness of 3 mm. The light diffusion plate was fitted in a ceiling of a terrace as a daylighting material, outside light was let in through the daylighting material. From the outside of the terrace, it was impossible to see inside the terrace. From the inside of the terrace, the outside light looked yellow-green, which created a calm atmosphere.

[Industrial Applicability]

The molded article according to the present invention can be utilized as a lighting cover, a front panel for a spotlight, or a daylighting material (e.g. a windowpane) each of which acquires a design feature by coloring transmitted light, a shelf board with a design feature, a (translucent) partition with a design feature, or the like.

[Reference Signs List]

| 10 | spotlight |
| 12 | concave mirror |
| 14 | LED unit |
| 16 | front panel (molded article made of a light-diffusing resin composition) |
| 22 | socket |
| 24 | feed circuit |
| 26 | light reflecting surface |
| 27 | light emission opening |
| 28 | LED |
| 30 | LED holder |
| 32 | mounting member |
| 51 | partition |
| 52a, 52b | poles |
| 53a, 53b | bars |
| 54 | light diffusion plate |

(molded article made of a light-diffusing resin composition)

The present invention can be embodied and practiced in other different forms without departing from the spirit and essential characteristics of the present invention. Therefore, the above-described embodiments are considered in all respects as illustrative and not restrictive. The scope of the invention is indicated by the appended claims rather than by the foregoing description. All variations and modifications falling within the equivalency range of the appended claims are intended to be embraced therein.

The present application claims priority to Japanese Patent Application No. 2015-194328 filed on September 30, 2015. The contents of this application are incorporated herein by reference in its entirety.

**Claims**

1.  A molded article made of a light-diffusing resin composition in which the light-diffusing resin composition comprises a thermoplastic resin and transparent particles which are dispersed in the thermoplastic resin,
    the transparent particles having a volume-average particle size, measured as indicated in the description, of not smaller than 4.5 $\mu$m and not greater than 7 $\mu$m,
    the transparent particles having a coefficient of variation in particle size of 5 to 15%, measured as inidcated in the description,
    a difference between a refractive index of the thermoplastic resin and a refractive index of the transparent particles being 0.02 to 0.1,
    the molded article containing the transparent particles in an amount of 0.1 to 1 % by weight, and the molded article having a thickness of 1 to 3 mm.

2.  A molded article made of a light-diffusing resin composition in which the light-diffusing resin composition comprises a thermoplastic resin and transparent particles which are dispersed in the thermoplastic resin,
    the transparent particles having a volume-average particle size, measured as indicated in the description, of over 7 $\mu$m and not greater than 9 $\mu$m,
    the transparent particles having a coefficient of variation in particle size of 5 to 15%,
    a difference between a refractive index of the thermoplastic resin and a refractive index of the transparent particles being 0.02 to 0.1,
    the molded article containing the transparent particles in an amount of 0.1 to 1 % by weight, and
    the molded article having a thickness of 1 to 3 mm.

3.  A lighting cover comprising the molded article made of a light-diffusing resin composition according to claim 1 or 2.

4.  A front panel for a spotlight comprising the molded article made of a light-diffusing resin composition according to claim 1 or 2.

5.  A partition comprising the molded article made of a light-diffusing resin composition according to claim 1 or 2.

6.  A daylighting material comprising the molded article made of a light-diffusing resin composition according to claims 1 or 2.

**Patentansprüche**

1.  Formgegenstand, hergestellt aus einer Licht-diffundierenden Harzzusammensetzung, worin die Licht-diffundierende Harzzusammensetzung ein thermoplastisches Harz und transparente Teilchen, welche in dem thermoplastischen Harz dispergiert sind, umfaßt,
    wobei die transparenten Teilchen eine volumenmittlere Teilchengröße, gemessen wie in der Beschreibung angezeigt, von nicht kleiner als 4,5 $\mu$m und nicht größer als 7 $\mu$m aufweisen,
    die transparenten Teilchen einen Variationskoeffizienten in der Teilchengröße von 5 bis 15%, gemessen wie in der Beschreibung angezeigt, aufweisen,
    ein Unterschied zwischen einem Brechungsindex des thermoplastischen Harzes und einem Brechungsindex der transparenten Teilchen 0,02 bis 0,1 ist,
    der Formgegenstand die transparenten Teilchen in einer Menge von 0,1 bis 1 Gew.-% enthält und
    der Formgegenstand eine Dicke von 1 bis 3 mm aufweist.

2.  Formgegenstand, hergestellt aus einer Licht-diffundierenden Harzzusammensetzung, worin die Licht-diffundierende Harzzusammensetzung ein thermoplastisches Harz und transparente Teilchen, welche in dem thermoplastischen Harz dispergiert sind, umfaßt,
    wobei die transparenten Teilchen eine volumenmittlere Teilchengröße, gemessen wie in der Beschreibung ange-zeigt, von über 7 $\mu$m und nicht mehr als 9 $\mu$m aufweisen,
    die transparenten Teilchen einen Variationskoeffizienten in der Teilchengröße von 5 bis 15% aufweisen,
    ein Unterschied zwischen einem Brechungsindex des thermoplastischen Harzes und einem Brechungsindex der transparenten Teilchen 0,02 bis 0,1 ist,
    der Formgegenstand die transparenten Teilchen in einer Menge von 0,1 bis 1 Gew.-% enthält und
    der Formgegenstand eine Dicke von 1 bis 3 mm aufweist.

**3.** Lichtabdeckung, umfassend den Formgegenstand, hergestellt aus einer Licht-diffundierenden Harzzusammensetzung gemäß Anspruch 1 oder 2.

**4.** Vorderplatte für ein Scheinwerferlicht, umfassend den Formgegenstand, hergestellt aus einer Licht-diffundierenden Harzzusammensetzung gemäß Anspruch 1 oder 2.

**5.** Trennwand, umfassend den Formgegenstand, hergestellt aus einer Licht-diffundierenden Harzzusammensetzung gemäß Anspruch 1 oder 2.

**6.** Tageslichtmaterial, umfassend den Formgegenstand, hergestellt aus einer Licht-diffundierenden Harzzusammensetzung gemäß Anspruch 1 oder 2.


**Revendications**

**1.** Article moulé fabriqué en une composition de résine diffusant la lumière dans lequel la composition de résine diffusant la lumière comprend une résine thermoplastique et des particules transparentes dispersées dans la résine thermoplastique,
les particules transparentes présentant une granulométrie moyenne en volume, mesurée comme indiqué dans la description, ni inférieure à 4,5 $\mu$m ni supérieure à 7 $\mu$m,
les particules transparentes présentant un coefficient de variation de granulométrie allant de 5 à 15%, mesuré comme c'est indiqué dans la description,
la différence entre l'indice de réfraction de la résine thermoplastique et l'indice de réfraction des particules transparentes allant de 0,02 à 0,1,
l'article moulé contenant les particules transparentes dans une quantité de 0,1 à 1% en poids, et
l'article moulé présentant une épaisseur allant de 1 à 3 mm.

**2.** Article moulé fabriqué en une composition de résine diffusant la lumière dans lequel la composition de résine diffusant la lumière comprend une résine thermoplastique et des particules transparentes dispersées dans la résine thermoplastique,
les particules transparentes présentant une granulométrie moyenne en volume, mesurée comme indiqué dans la description, supérieure à 7 $\mu$m et pas supérieure à 9 $\mu$m,
les particules transparentes présentant un coefficient de variation de granulométrie allant de 5 à 15%,
la différence entre l'indice de réfraction de la résine thermoplastique et l'indice de réfraction des particules transparentes allant de 0,02 à 0,1,
l'article moulé contenant les particules transparentes dans une quantité allant de 0,1 à 1% en poids, et
l'article moulé présentant une épaisseur allant de 1 à 3 mm.

**3.** Recouvrement d'éclairage comprenant l'article moulé fabriqué en une composition de résine diffusant la lumière selon la revendication 1 ou 2.

**4.** Panneau frontal d'un spot comprenant l'article moulé fabriqué en une composition de résine diffusant la lumière selon la revendication 1 ou 2.

**5.** Cloisonnement comprenant l'article moulé fabriqué en une composition de résine diffusant la lumière selon la revendication 1 ou 2.

**6.** Matériel d'éclairage naturel comprenant l'article moulé fabriqué en une composition de résine diffusant la lumière selon la revendication 1 ou 2.

Fig.1

Fig.2

Fig.3

Fig.4

Fig.5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07234304 A
- WO 2014025657 A1

- JP 2015194328 A

**Non-patent literature cited in the description**

- Multisizer III" was calibrated with use of an aperture which matched the size of particles to be measured. REFERENCE MANUAL FOR THE COULTER MULTISIZER. Coulter Electronics Limited, 1987